# EUROPÄISCHE PATENTSCHRIFT

(11) **EP 1 698 881 B1**
(45) Veröffentlichungstag und Bekanntmachung des Hinweises auf die Patenterteilung: **30.07.2008**
(21) Anmeldenummer: 05004890.9
(22) Anmeldetag: 05.03.2005
(51) Int. Cl.: G01N 11/14, G01N 3/24

(54) **Verfahren und Vorrichtung zur Messung rheologischer Stoffeigenschaften einer visko-elastischen Probe.**
Method and apparatus for measuring the reological parametres of a viscoelastic compound.
Méthode et appareil de mesure de paramètres réologiques d'un composé viscoélastique.

(43) Veröffentlichungstag der Anmeldung: 06.09.2006
(73) Patentinhaber: Scarabaeus, Mess- und Produktionstechnik Gmbh, 35428 Langgöns (DE)
(72) Erfinder: Nussbaum, Walter, Dipl.-Ing, 35428 Langgöns (DE)
(74) Vertreter: Knefel, Cordula

(56) Entgegenhaltungen:
- EP-A- 0 545 728
- DE-A1- 10 156 346

## Beschreibung

Die Erfindung betrifft ein Verfahren zur Bestimmung rheologischer Stoffgrößen sowie ein Rheometer.

Zum Stand der Technik (DIN 53 529) gehören Kegel-Platte-Rheometer sowie Platte-Platte-Rheometer.

Bei den Kegel-Platte-Rheometern befindet sich die Probe in einem Scherspalt zwischen einem sehr flachen Kegel und einer koaxialen Platte. Durch die Wahl des Kegelwinkels wird eine gleichmäßige Schergeschwindigkeitsverteilung im Messspalt erzeugt. Die Steuerung erfolgt über Drehzahl oder Drehmoment. Gemessen werden entsprechend Drehzahl beziehungsweise Drehmoment. Durch Kraftaufnehmer an der Antriebswelle beziehungsweise an der Kegelunterseite kann eine Ableitung der Normalspannungen erfolgen.

Bei den Platte-Platte-Rheometern, wie in der DE 101 56 346 A1 beschrieben, befindet sich die Probe zwischen zwei koaxialen kreisrunden Platten, von denen eine rotiert. Die Deformationsgeschwindigkeit ist im Gegensatz zum Kegel-Platte-System nicht konstant, sondern steigt von der Mitte nach außen an (inhomogene Deformation). Die Messung beziehungsweise Steuerung erfolgt über Drehmoment beziehungsweise Drehzahl.

Die zum Stand der Technik gehörenden Platte-Platte-Systeme weisen den Nachteil auf, dass die Schergeschwindigkeit über dem Radius unterschiedlich und im geschlossenen System am Außendurchmesser nicht definiert ist.

Darüber hinaus können hochviskose Medien lediglich mit geschlossenen Systemen, wie aus der EP 0 545 728 A1 bekannt, gemessen werden. Bei geschlossenen Systemen treten am Rand jedoch undefinierte Scherungen (Wandgleiten, Wandhaften) auf.

Zum Stand der Technik gehören weiterhin Kegel-Kegel-Systeme, bei denen die Probe zwischen zwei Kegeln angeordnet wird. Bei den zum Stand der Technik gehörenden Systemen wird eine Seite drehend oder oszillierend angetrieben, und auf der Gegenseite in axialer Richtung gesehen ist eine Messnabe für eine Drehmomenterfassung vorgesehen.

Die zum Stand der Technik gehörenden Kegel-Kegel-Systeme weisen den Nachteil auf, dass eine weitere Verwendung der Probe nur eingeschränkt oder überhaupt nicht möglich ist. Es können an den Proben keine physikalischen Prüfungen wie Härte oder Rückprallelastizität normgerecht gemessen werden aufgrund der Probendicke und der Oberfläche der Kegelhinterschnitte.

Auch ist bei den Kegel-Kegel-Systemen eine Verwendung der gleichen Probe für eine Wiederholung der Messung nicht möglich. Die Probenkörper können nur einmal verwendet werden, das heißt ein nochmaliges Messen der Eigenschaften nach externer thermischer oder mechanischer Belastung ist nicht möglich.

Ein weiterer Nachteil des Kegel-Kegel-Systems ist, dass die Schergeschwindigkeit in einem Kegelsystem in der Kammer über dem Radius identisch, aber bei geschlossenen Systemen am Außendurchmesser nicht definiert ist.

Das Kegel-Kegel-System weist den weiteren Nachteil auf, dass das Temperaturfeld und die Probentemperatur nicht homogen sind, das heißt über dem Probenquerschnitt erhält man unterschiedliche Vulkanisationsgrade.

Darüber hinaus ist der Kammerspalt beim Kegel-Kegel-System schwierig einzustellen. Bei 0,5 Grad Oszillationswinkel und Ausführung des Kegels als Kegelstumpf ist der tolerierbare Spalt mit einer Auflösung von wenigen Mikrometern einzustellen. Aufgrund der Wärmeausdehnung ist dieses Maß durch die Summe aller Einzelbauteile schon als Bewegung zu messen.

Das der Erfindung zugrunde liegende technische Problem besteht darin, ein Verfahren sowie eine Vorrichtung anzugeben, mit denen rheologische Stoffgrößen ohne die genannten Nachteile, das heißt mit einer hohen Messgenauigkeit gemessen werden können.

Dieses technische Problem wird durch ein Verfahren mit den Merkmalen des Anspruches 1 oder 2 gelöst sowie durch ein Rheometer mit den Merkmalen des Anspruches 7 oder 8.

Das erfindungsgemäße Verfahren zeichnet sich dadurch aus, dass eine Probe zwischen zwei Platten angeordnet wird, und dass am Probenrand der Probe ein formschlüssig anliegender Ring angeordnet wird, dass eine oder beide Platten angetrieben werden, und dass wenigstens ein in oder an dem Ring angeordneter Sensor ein Drehmoment misst.

Gemäß einer weiteren Ausführungsform des erfindungsgemäßen Verfahrens ist es auch möglich, dass der am Probenrand der Probe anliegende Ring angetrieben wird, und dass mit wenigstens einem in oder an dem Ring angeordneten Sensor das Drehmoment gemessen wird. Gemäß einer weiteren Ausführungsform ist es auch möglich, dass der am Probenrand der Probe anliegende Ring angetrieben wird, und dass mit wenigstens einem in der wenigstens einen Platte angeordneten Sensor das Drehmoment gemessen wird.

Der Vorteil des erfindungsgemäßen Verfahrens liegt darin, dass die Kammergeometrie ein Platte-Platte-System ist. Die Probe befindet sich zwischen den beiden Platten und wird durch die beiden Platten beheizt und auf einem definierten Abstand gehalten.

Gemäß einer besonders bevorzugten Ausführungsform werden beide Platten entweder durch einen oder zwei Motoren gedreht oder oszilliert. Am Probenrand befindet sich eine Messnabe, die zum einen die Kammer für die viskoelastischen Stoffe verschließt und zum anderen als Messnabe für die tangentialen Kräfte/Drehmomente am Probenrand dient.

Das erfindungsgemäße Verfahren hat den Vorteil, dass durch das Platte-Platte-System die Proben plan ausgeführt sind. Diese Proben können für weitere physikalische Prüfungen weiterverwendet werden, beispielsweise für eine Härteprüfung, eine Rückprallelastizitätsprüfung und/oder eine Dichteprüfung. Es ist auch möglich, dielektrische Messungen durchzuführen, Messungen des Oberflächenwiderstandes und/oder dynamische Messungen.

Dadurch, dass der Probenkörper weiterverwendet werden kann, erhält man eine deutliche Materialersparnis. Hinzu kommt auch eine Arbeitskostenersparnis, da nicht mehr für jede Prüfung zusätzlich Proben hergestellt werden müssen, sondern die Proben, die ohnehin vorhanden sind, gemessen werden können.

Da für jede Charge im Prozess Prüfungen vorgenommen werden, besteht eine erhebliche Ersparnis durch das erfindungsgemäße Verfahren, wenn der Probenkörper weiterverwendet werden kann.

Durch den weiterverwendbaren Probenkörper ist es auch möglich, das gesamte Handlingsystem der Proben weitgehend automatisiert auszubilden. Die Proben können automatisch gemessen und geprüft und an einen nächsten Prüfstand weitergegeben werden.

Durch die Ausbildung des Ringes, der formschlüssig an dem Außenrand der Probe anliegt, ist es möglich, dass auch hochviskose Medien gemessen werden können, ohne dass am Rand undefinierte Scherungen auftreten.

Besonders vorteilhaft sind die Verfahren, bei denen entweder beide Platten oder nur eine Platte angetrieben wird, und bei denen der in oder an dem Ring angeordnete Messsensor das Drehmoment misst, da hierbei nicht der Nachteil wie bei den zum Stand der Technik gehörenden Platte-Platte-Systemen auftritt, dass das Drehmoment über dem Radius unterschiedlich ausgebildet ist. Dieser Nachteil tritt auch bei der Variante nicht auf, bei der der Außenring oszilliert und gleichzeitig der Messsensor in dem Außenring misst.

Bei der Ausführungsform, bei der der Außenring oszilliert und ein Sensor in einer Platte das Drehmoment misst, ist zwar die Schergeschwindigkeit über dem Radius unterschiedlich ausgebildet. Sie hat jedoch gegenüber dem Stand der Technik nach wie vor den Vorteil, dass auch hochviskose Medien gemessen werden können, ohne dass an der Wand undefinierte Scherungen auftreten.

Vorteilhaft wird die wenigstens eine Platte oder der Ring oszillierend oder mit einer Drehbewegung angetrieben.

Gemäß einer weiteren bevorzugten Ausführungsform wird die Probe mit einem hohen Druck zwischen den Platten eingespannt, beispielsweise mit einem Druck von bis zu einer Tonne, so dass die Probe über den Platten übersteht und sich formschlüssig an den Ring anlegt.

Um konstante Messbedingungen zu schaffen, wird die wenigstens eine Platte, vorteilhaft werden beide Platten beheizt.

Das erfindungsgemäße Rheometer weist eine Probenaufnahme auf, welche aus zwei Platten besteht, wobei ein am Probenrand der Probe formschlüssig anliegender Ring vorgesehen ist. Eine oder beide Platten sind antreibbar ausgebildet und wenigstens ein in oder an dem Ring angeordneter Sensor misst die Schergeschwindigkeit.

Gemäß einer weiteren Ausführungsform der Erfindung ist es auch möglich, dass der Ring antreibbar ausgebildet ist, und dass in oder an dem Ring ein das Drehmoment messender Sensor angeordnet ist. Es ist auch möglich, dass der Ring antreibbar ausgebildet ist, und dass in wenigstens einer Platte ein das Drehmoment messender Sensor vorgesehen ist.

Gemäß einer besonders bevorzugten Ausführungsform ist der Ring als Messnabe ausgebildet. Gemäß einer besonders vorteilhaften Ausführungsform sind die Sensoren als Speichenradsensoren ausgebildet.

Vorteilhaft ist wenigstens eine Platte als beheizbare Platte ausgebildet, um möglichst konstante Messbedingungen zu schaffen.

Um dem hohen Druck standzuhalten und eine gute Wärmeleitfähigkeit aufzuweisen, ist wenigstens eine Platte vorteilhaft als Metallplatte ausgebildet.

Gemäß einer weiteren vorteilhaften Ausführungsform sind Sensoren vorgesehen, die bei sehr hohen Temperaturen, das heißt bis beispielsweise circa 200 °C hitzebeständig sind und das Drehmoment messen können.

Das erfindungsgemäße Verfahren und die erfindungsgemäße Vorrichtung ist in erster Linie auf Polymere, unter die Kautschuk und Kunststoff fallen, anwendbar. Es ist jedoch auch möglich, das erfindungsgemäße Verfahren und die erfindungsgemäße Vorrichtung für andere Einsatzgebiete zu verwenden, beispielsweise in der Lebensmittelindustrie oder in anderen Industriezweigen.

Die beiden Platten, zwischen denen die Probe angeordnet ist und/oder der Ring, können Riffelungen aufweisen, um ein Durchrutschen der Probe zu vermeiden.

Weitere Merkmale und Vorteile der Erfindung ergeben sich anhand der zugehörigen Zeichnung, in der mehrere Ausführungsbeispiele einer erfindungsgemäßen Kammer eines Rheometers nur beispielhaft dargestellt sind. In der Zeichnung zeigen:
- Fig. 1: ein Platte-Platte-System mit Messnabe mit zwei angetriebenen Platten in Seitenansicht;
- Fig. 2: ein Platte-Platte-System mit einer angetriebenen Platte und Messnabe in Seitenansicht;
- Fig. 3: ein Platte-Platte-System mit Außenring, der gleichzeitig angetrieben ist und Messsystem ist, in Seitenansicht;
- Fig. 4: ein Platte-Platte-System mit angetriebenem Außenring und Sensor in der Platte;
- Fig. 5: ein Speichenradsensor.

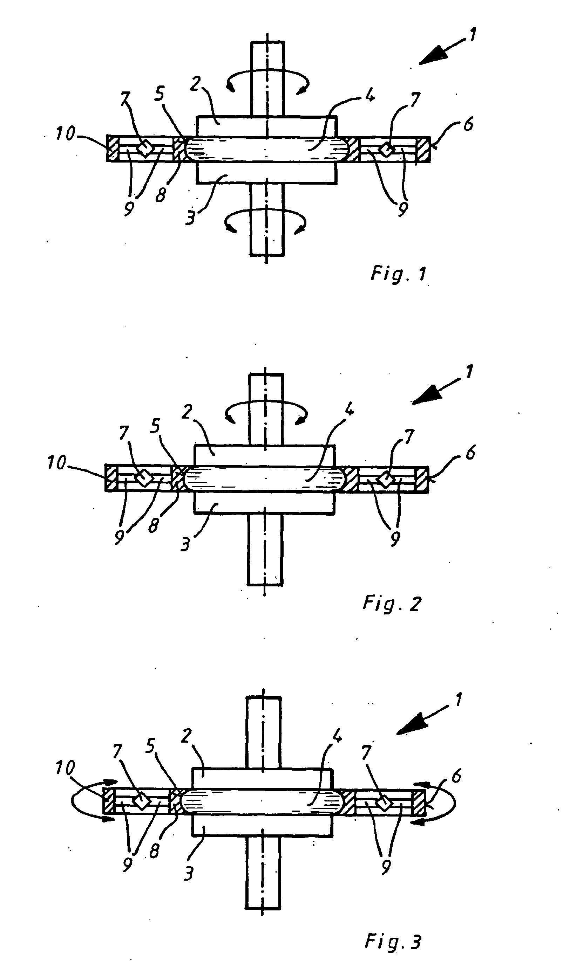

Fig. 1 zeigt ein Platte-Platte-System (1) eines Rheometers (nicht dargestellt) mit einer ersten Platte (2) und einer zweiten Platte (3), zwischen denen eine Probe (4) angeordnet ist. Die Probe (4) wird durch die Platten (2, 3) mit hohem Druck zusammengedrückt, so dass sich der Rand (5) nach außen wölbt und an einem Ring (6) anliegt. Der Ring (6) ist als Messnabe mit Dehnungsmessstreifen (7), Innenring (8), Außenring (10) und Speichen (9) ausgebildet.

Gemäß Fig. 1 werden die beiden Platten (2, 3) angetrieben, und mit der Messnabe (Ring) (6) wird das Drehmoment gemessen.

Fig. 2 zeigt das Platte-Platte-System (1) mit den Platten (2, 3) und der Probe (4). Gemäß der Ausführungsform gemäß Fig. 2 wird die obere Platte (2) angetrieben, und mittels der Messnabe (Ring) (6) wird das Drehmoment gemessen.

Fig. 3 zeigt das System (1). In der in Fig. 3 dargestellten Ausführungsform wird der Ring (6), der gleichzeitig als Messnabe ausgebildet ist, angetrieben und misst mittels der Dehnungsmessstreifen gleichzeitig das Drehmoment.

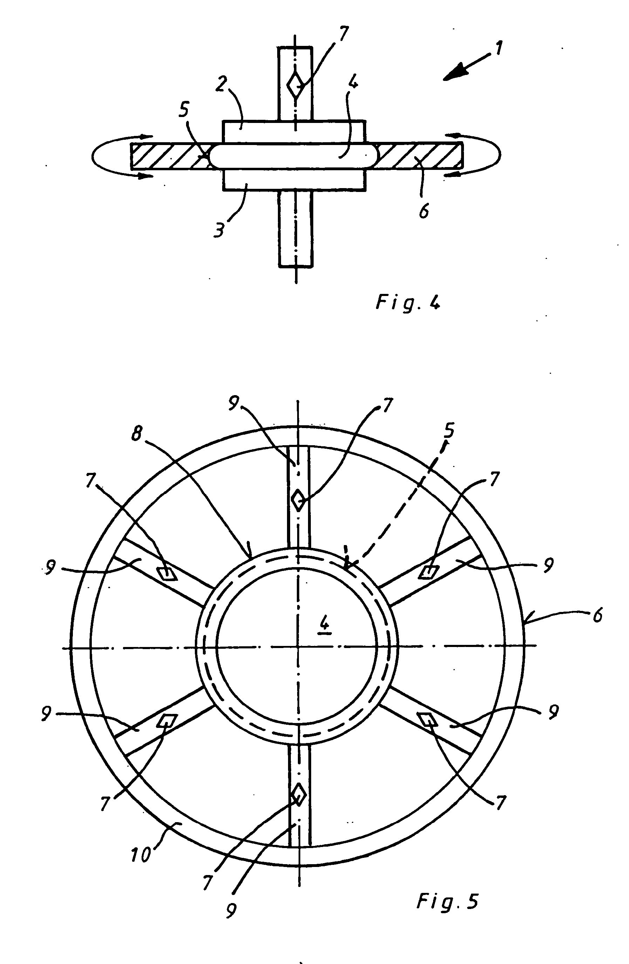

Gemäß Fig. 4 ist das Platte-Platte-System (1) dargestellt. In diesem Ausführungsbeispiel wird der Ring (6) angetrieben und mittels eines Dehnungsmessstreifens (7), der in einer Achse der Platte (2) angeordnet ist, das Drehmoment gemessen.

Fig. 5 zeigt die Messnabe (Ring) (6), die als Speichenradsensor ausgebildet ist. Die Probe (4) wird von einem Ring (8) an ihrem Probenrand (5) umschlossen. Die Messnabe (Ring) (6) weist Speichen (9) auf, in denen Dehnungsmessstreifen (7) angeordnet sind. Ein äußerer Ring (10) der Messnabe (Ring) (6) ist als feststehender Ring ausgebildet. Über die Speichen (9) wird eine Drehbewegung, die von der Probe (4) auf den Ring (8) übertragen wird, von den Dehnungsmessstreifen (7) erfasst.

### Bezugszahlen

- 1: Platte-Platte-System
- 2: Platte
- 3: Platte
- 4: Probe
- 5: Probenrand
- 6: Ring
- 7: Dehnungsmessstreifen
- 8: innerer Ring des Speichenradsensors
- 9: Speichen
- 10: äußerer Ring des Speichenradsensors

## Patentansprüche

1. Verfahren zur Messung rheologischer Stoffeigenschaften einer viskoelastischen Probe, bei dem die Probe zwischen zwei Platten (2,3) angeordnet wird, und bei dem eine oder beide Platten angetrieben werden,
**dadurch gekennzeichnet, dass** an einem Probenrand (5) der Probe (4) ein formschlüssig anliegender Ring (6, 8) angeordnet wird, und dass wenigstens ein in oder an dem Ring (6, 8) angeordneter Sensor (7) ein Drehmoment misst.

2. Verfahren zur Messung rheologischer Stoffeigenschaften einer viskoelastischen Probe, bei dem die Probe zwischen zwei Platten (2,3) angeordnet wird,
**dadurch gekennzeichnet, dass** am Probenrand (5) der Probe (4) ein an der Probe (4) formschlüssig anliegender Ring (6, 8) angeordnet wird, dass der Ring (6, 8) angetrieben wird, und dass wenigstens ein in oder an dem Ring (6, 8) angeordneter Sensor (7) oder wenigstens ein in wenigstens einer Platte (2, 3) angeordneter Sensor (7) ein Drehmoment misst.

3. Verfahren nach Anspruch 1 oder 2, **dadurch gekennzeichnet, dass** die wenigstens eine Platte (2, 3) oder der Ring (6, 8) oszillierend oder mit einer Drehbewegung angetrieben wird.

4. verfahren nach Anspruch 1 oder 2, **dadurch gekennzeichnet, dass** die Probe (4) mit hohem Druck zwischen den Platten eingespannt wird, derart, dass ein Probenrand (5) über den Platten (2, 3) übersteht.

5. Verfahren nach Anspruch 4, **dadurch gekennzeichnet, dass** der Probenrand (5) durch den Druck der Platten (2, 3) an den Ring (6, 8) oder an eine Messnabe gedrückt wird.

6. Verfahren nach einem der vorhergehenden Ansprüche, **dadurch gekennzeichnet, dass** wenigstens eine Platte (2, 3) beheizt wird.

7. Rheometer mit wenigstens einer Probenaufnahme zur Messung wenigstens einer Probe aus viskoelastischem Material, wobei das Rheometer zwei Platten (2, 3) aufweist für die Aufnahme der Probe (4), bei dem eine oder beide Platten antreibbar ausgebildet sind,
**dadurch gekennzeichnet, dass** ein am Probenrand (5) der Probe (4) formschlüssig anliegender Ring (6, 8) angeordnet ist, und dass wenigstens ein in oder an dem Ring (6, 8) angeordneter, ein Drehmoment messender Sensor (7) vorgesehen ist.

8. Rheometer mit wenigstens einer Probenaufnahme zur Messung wenigstens einer Probe aus viskoelastischem Material, wobei das Rheometer zwei Platten (2, 3) aufweist für die Aufnahme der Probe (4),
**dadurch gekennzeichnet, dass** ein am Probenrand (5) der Probe (4) formschlüssig anliegender Ring (6, 8) angeordnet ist, dass der Ring (6, 8) antreibbar ausgebildet ist, und dass wenigstens ein in oder an dem Ring (6, 8) angeordneter, ein Drehmoment messender Sensor (7) oder wenigstens ein in wenigstens einer Platte (2, 3) angeordneter, ein Drehmoment messender Sensor (7) vorgesehen ist.

9. Rheometer nach Anspruch 7 oder 8, **dadurch gekennzeichnet, dass** der Ring (6, 8) als Messnabe ausgebildet ist.

10. Rheometer nach Anspruch 7, 8 oder 9, **dadurch gekennzeichnet, dass** wenigstens eine Platte (2, 3) als beheizbare Platte ausgebildet ist.

11. Rheometer nach einem der Ansprüche 7 bis 10, **dadurch gekennzeichnet, dass** wenigstens eine Platte (2, 3) als Metallplatte ausgebildet ist.

12. Rheometer nach einem der Ansprüche 7 bis 11, **dadurch gekennzeichnet, dass** Sensoren (7) vorgesehen sind, die als bis circa 200 °C messende Sensoren ausgebildet sind.

13. Rheometer nach einem der Ansprüche 7 bis 12, **dadurch gekennzeichnet, dass** die Messnabe (6) als Speichenradsensor ausgebildet ist.

14. Rheometer nach einem der Ansprüche 7 bis 13, **dadurch gekennzeichnet, dass** in dem Speichenradsensor (6) Dehnungsmessstreifen (7) angeordnet sind.

## Claims

1. A method of measuring rheological properties of a viscoelastic sample, in which the sample is arranged between two plates (2, 3) and in which one or both plates are driven, **characterised in that** a positively fitting ring (6, 8) is arranged at an edge (5) of the sample (4) and **in that** at least one sensor (7) arranged in or on the ring (6, 8) measures a torque.

2. A method of measuring rheological properties of a viscoelastic sample, in which the sample is arranged between two plates (2, 3), **characterised in that** a positively fitting ring (6, 8) resting against the sample (4) is arranged at the edge (5) of the sample (4), **in that** the ring (6, 8) is driven and **in that** at least one sensor (7) arranged in or on the ring (6, 8) or at least one sensor (7) arranged in at least one plate (2, 3) measures a torque.

3. A method according to claim 1 or 2, **characterised in that** the at least one plate (2, 3) or the ring (6, 8) is driven in an oscillating manner or with a rotational movement.

4. A method according to claim 1 or 2, **characterised in that** the sample (4) is clamped between the plates under high pressure so that a sample edge (5) projects beyond the plates (2, 3).

5. A method according to claim 4, **characterised in that** the sample edge (5) is pressed against the ring (6, 8) or against a measuring hub by the pressure of the plates (2, 3).

6. A method according to any one of the preceding claims, **characterised in that** at least one plate (2, 3) is heated.

7. A rheometer with at least one sample holder for measuring at least one sample of a viscoelastic material, wherein the rheometer has two plates (2, 3) for holding the sample (4) and one or both plates are drivably formed, **characterised in that** a positively fitting ring (6, 8) is arranged at the edge (5) of the sample (4) and **in that** at least one sensor (7) which is arranged in or on the ring (6, 8) and measures a torque is provided.

8. A rheometer with at least one sample holder for measuring at least one sample of a viscoelastic material, wherein the rheometer has two plates (2, 3) for holding the sample (4), **characterised in that** a positively fitting ring (6, 8) is arranged at the edge (5) of the sample (4), **in that** the ring (6, 8) is drivably formed and **in that** at least one sensor (7) which is arranged in or on the ring (6, 8) and measures a torque or at least one sensor (7) which is arranged in at least one plate (2, 3) and measures a torque is provided.

9. A rheometer according to claim 7 or 8, **characterised in that** the ring (6, 8) is formed as a measuring hub.

10. A rheometer according to claim 7, 8 or 9, **characterised in that** at least one plate (2, 3) is formed as a heatable plate.

11. A rheometer according to any one of claims 7 to 10, **characterised in that** at least one plate (2, 3) is formed as a metal plate.

12. A rheometer according to any one of claims 7 to 11, **characterised in that** sensors (7) are provided which are formed as sensors measuring up to approximately 200°C.

13. A rheometer according to any one of claims 7 to 12, **characterised in that** the measuring hub (6) is formed as a spoked-wheel sensor.

14. A rheometer according to any one of claims 7 to 13, **characterised in that** strain gauges (7) are arranged in the spoked-wheel sensor (6).

## Revendications

1. Procédé de mesure de propriétés rhéologiques de la matière d'un échantillon viscoélastique, au cours duquel l'échantillon est disposé entre deux plaques (2, 3) et au cours duquel une ou les deux plaques sont entraînées,
**caractérisé en ce que**, sur un bord (5) d'échantillon de l'échantillon (4) est disposé un anneau (6, 8) adjacent à engagement positif et **en ce qu'**au moins un capteur (7) disposé dans ou sur l'anneau (6, 8) mesure un couple.

2. Procédé de mesure de propriétés rhéologiques de la matière d'un échantillon viscoélastique, au cours duquel l'échantillon est disposé entre deux plaques (2, 3),
**caractérisé en ce que**, sur le bord (5) d'échantillon de l'échantillon (4) est disposé un anneau à engagement positif (6, 8) adjacent au composé (4), **en ce que** l'anneau (6, 8) est entraîné, et **en ce qu'**au moins un capteur (7) disposé dans ou sur l'anneau (6, 8) ou au moins un capteur (7) disposé dans au moins une plaque (2, 3) mesure un couple.

3. Procédé selon la revendication 1 ou 2, **caractérisé en ce que** la au moins une plaque (2, 3) ou l'anneau (6, 8) est entraîné(e) par des oscillations ou avec un mouvement de rotation.

4. Procédé selon la revendication 1 ou 2, **caractérisé en ce que** l'échantillon (4) est maintenu entre les plaques avec une pression élevée, de telle sorte qu'un bord (5) d'échantillon fait saillie au-dessus des plaques (2, 3).

5. Procédé selon la revendication 4, **caractérisé en ce que** le bord (5) d'échantillon s'appuie, sous la pression des plaques (2, 3), sur l'anneau (6, 8) ou sur un moyeu de mesure.

6. Procédé selon l'une des revendications précédentes **caractérisé en ce qu'**au moins une plaque (2, 3) est chauffée.

7. Rhéomètre avec au moins un logement d'échantillon pour la mesure d'au moins un échantillon en un matériau viscoélastique, le rhéomètre présentant deux plaques (2, 3) pour le logement de l'échantillon (4), rhéomètre, dans lequel une ou deux plaques sont réalisées de manière à pouvoir être entraînées,
**caractérisé en ce que**, sur le bord (5) d'échantillon de l'échantillon (4) est disposé un anneau adjacent à engagement positif (6, 8), et **en ce qu'**au moins un capteur (7) disposé dans ou sur l'anneau (6, 8) et mesurant un couple est prévu.

8. Rhéomètre équipé d'au moins un logement d'échantillon pour la mesure d'au moins un échantillon en un matériau viscoélastique, le rhéomètre présentant deux plaques (2, 3) pour le logement de l'échantillon (4),
**caractérisé en ce que**, sur le bord (5) d'échantillon de l'échantillon (4) est disposé un anneau adjacent à engagement positif (6, 8), **en ce que** l'anneau (6, 8) est réalisé de manière à pouvoir être entraîné, et **en ce qu'**au moins un capteur (7) disposé dans ou sur l'anneau (6, 8) et mesurant un couple ou au moins un capteur (7) disposé dans au moins une plaque (2, 3) et mesurant un couple est prévu.

9. Rhéomètre selon la revendication 7 ou 8, **caractérisé en ce que** l'anneau (6, 8) est réalisé comme un moyeu de mesure.

10. Rhéomètre selon la revendication 7, 8 ou 9, **caractérisé en ce qu'**au moins une plaque (2, 3) est réalisée comme une plaque pouvant être chauffée.

11. Rhéomètre selon l'une des revendications 7 à 10, **caractérisé en ce qu'**au moins une plaque (2, 3) est réalisée comme une plaque métallique.

12. Rhéomètre selon l'une des revendications 7 à 11, **caractérisé en ce que** des capteurs (7) sont prévus, lesquels sont réalisés comme des capteurs mesurant jusqu'à environ 200 °C.

13. Rhéomètre selon l'une des revendications 7 à 12, **caractérisé en ce que** le moyeu de mesure (6) est réalisé comme un capteur à roue à rayons.

14. Rhéomètre selon l'une des revendications 7 à 13, **caractérisé en ce que** des bandes de mesure de l'allongement (7) sont disposées dans le capteur à roue à rayons (6).
